# EUROPEAN PATENT SPECIFICATION

(11) **EP 4 456 770 B1**
(45) Date of publication and mention of the grant of the patent: **12.02.2025**
(21) Application number: 24705691.4
(22) Date of filing: 21.02.2024
(51) Int. Cl.: A47J 37/06

(54) **COOKING APPARATUS WITH MODIFIED HEATED AIR DELIVERY**
KOCHVORRICHTUNG MIT MODIFIZIERTER HEISSLUFTZUFUHR
APPAREIL DE CUISSON AVEC DISTRIBUTION D'AIR CHAUD MODIFIÉE

(30) Priority: 22.03.2023 EP 23163339
(43) Date of publication of application: 06.11.2024
(73) Proprietor: Versuni Holding B.V., 5656 AE Eindhoven (NL)
(72) Inventor: KAISER, Manuel, 5656 AE Eindhoven (NL)
(74) Representative: Vollering, Stefanus Franciscus Maria
(86) International application number: PCT/EP2024/054406
(87) International publication number: WO 2024/193935

(56) References cited:
- WO-A1-2017/178739
- US-A1- 2016 120 364

## Description

### FIELD OF THE INVENTION

The invention relates to a cooking apparatus, for example a cooking apparatus comprising a table-top cooking appliance.

### BACKGROUND OF THE INVENTION

Various different types of cooking appliance are known, such as table-top cooking appliances that are positionable by the consumer on a table-top or kitchen work-top.

Examples of table-top cooking appliances include so-called air cookers, food steamers and air fryers. Air cookers may be regarded, for instance, as mini convection ovens, owing to having a fan for circulating heated air in the cooking appliance's cooking chamber.

Air cookers may combine heated air circulation with food steaming functionality. Such air cookers have been found to promote nutrient preservation in the food being cooked, as well as achieving favorable taste results for various different types of food.

Such heated air circulation and/or steaming functionalities can, for example, be combined in so-called top-loaded table-top cooking appliances, in which the cooking chamber is accessible in a way that enables food to be received in the cooking chamber from above, such as via a lid.

Air cookers can be distinguished from air fryers at least partly in terms of the direction of heated air circulation in the cooking chamber. In air fryers, air delivery and extraction vents are arranged so that heated air traverses a height of the cooking chamber, and in this way passes upwardly (and/or downwardly) through the food received in the cooking chamber. The penetration of heated air into the food associated with this arrangement of the air delivery and extraction vents provides a frying-type cooking effect.

Existing air cookers, which may have an air circulation system, e.g. fan, and heating system beside the cooking chamber rather than above or below the cooking chamber, may not achieve the same kind of heated air penetration into the food that is associated with air fryers. This may be due to the air circulation system and air delivery vent arranged to deliver heated air from sidewall vent position(s) laterally, in other words horizontally, into the cooking chamber.

Thus, the architecture of conventional cooking appliances, such as air cookers, may place limitations on cooking effects that are achievable and/or on food types that can be effectively cooked using such cooking appliances.

WO 2017/178739 A1 discloses a hot-air cooker comprising: a housing including a first cavity and a second cavity, as well as an air inlet and an air outlet connecting the two cavities; an inner container installed inside the first cavity; an upper cover installed above the inner container and including a deflector assembly; a resistor installed inside the second cavity; and a fan installed inside the second cavity. The deflector assembly directs the forced hot air from the fan into the inner container.

### SUMMARY OF THE INVENTION

The invention is defined by the claims.

According to examples in accordance with an aspect of the invention, there is provided a cooking apparatus comprising: a cooking chamber for receiving food, the cooking chamber being at least partly delimited by a base and a sidewall upstanding from the base; a heating system; an air circulation system; an air delivery vent through which air heated by the heating system is moveable into the cooking chamber by the air circulation system, the air delivery vent being provided at least at one or more sidewall vent positions of the sidewall, each of the one or more sidewall vent positions being elevated relative to the base; and at least one air guide member arranged or arrangeable in the cooking chamber to guide the heated air delivered into the cooking chamber from said one or more sidewall vent positions downwardly towards the base.

By the air guide member(s) directing the heated air from the sidewall vent position(s) downwardly towards the base, penetration of the heated air into the food received in the cooking chamber may be enhanced in spite of the heated air being initially delivered into the cooking chamber via a sidewall-positioned air delivery vent.

In some embodiments, an air fryer-like cooking effect may be achievable in spite of the air delivery vent being provided at the sidewall vent position(s) of the cooking chamber's sidewall.

In some embodiments, the sidewall comprises a rear portion and a front portion facing the rear portion, with the air delivery vent being provided at least at the rear portion, and the at least one air guide member extending between the rear portion and the front portion.

By the air guide member(s) extending between the rear portion and the front portion, the heated air may be guided from the rear portion towards the front portion, as well as downwardly towards the base.

This may assist penetration of the heated air into the food received in the cooking chamber.

The sidewall may comprise a first lateral portion and a second lateral portion that faces the first lateral portion, with each of the first and second lateral portions extending between the rear portion and the front portion of the sidewall.

In such embodiments, the at least one air guide member may comprise at least one first air guide member extending adjacent to the first lateral portion and/or at least one second air guide member extending adjacent to the second lateral portion.

The first air guide member(s) and/or the second air guide member(s) being respectively adjacent to the first lateral portion and the second lateral portion may mean that the heated air initially guided by the first and/or second air guide member(s) along side(s) of the cooking chamber can subsequently be introduced into the food received more centrally in the cooking chamber, e.g. during passage of the heated air back towards an air extraction vent provided at the rear portion of the cooking chamber's sidewall. This can assist penetration of heated air into the food received in the cooking chamber.

In embodiments in which both the first air guide member(s) and the second air guide member(s) are included, a relatively uniform penetration of heated air into the food, and thus a more even cooking result, may be achievable, in particular relative to the scenario in which only one of the first and second air guide members is provided.

At least one of the air guide member(s) may extend to reach a position at or proximal to the front portion. This extension of the air guide member(s) can be regarded as meaning that the air guide member(s) extend(s) over a majority of the cooking chamber's lateral extent between the rear portion and the front portion.

In some embodiments, at least one of the first air guide member(s) extends along the first lateral portion to reach a position at or proximal to the front portion. Alternatively or additionally, at least one of the second air guide member(s) may extend along the second lateral portion to reach a position at or proximal to the front portion.

This extension of the first and/or second air guide member(s) to the position at or proximal to the front portion of the sidewall may, for example, effectively extend the distance across which the heated air guided by the first and/or second air guide member(s) to the base of the cooking chamber is required to travel when reverting to the air extraction vent provided at the rear portion of the cooking chamber's sidewall. This may assist to ensure that the food received in the cooking chamber between the front and rear portions is penetrated, rather than being bypassed, by the heated air reverting to the air extraction vent.

In some embodiments, the at least one air guide member comprises one or more gradient surfaces that decline(s) from at or proximal to the sidewall vent position(s) towards the base of the cooking chamber.

Such gradient surface(s), in other words sloping surface(s), may, for example, comprise curves and/or undulations to control guiding of the heated air by the air guide member(s) towards the base of the cooking chamber.

In some embodiments, the at least one air guide member comprises an upper air guide member and a lower air guide member, with the upper and lower air guide members being spaced apart from each other to define a flow path for the heated air between the upper and lower air guide members.

In other words, a channel for the heated air may be provided between the upper air guide member and the lower air guide member.

In such embodiments, the flow path may extend from an upper sidewall vent position downwardly towards the base of the cooking chamber.

Such a flow path/channel may, for example, have a lateral side that is open to the cooking chamber, e.g. open to the cooking chamber between the rear portion and the front portion.

In some embodiments, the lower air guide member is arranged to define a further flow path, underneath the lower air guide member, that extends from a lower sidewall vent position downwardly towards the base of the cooking chamber.

In other words, a further channel for the heated air may be provided beneath the lower air guide member, for example between an underside of the lower air guide member and the base of the cooking chamber.

Such a further flow path/channel may, for example, have a lateral side that is open to the cooking chamber, e.g. open to the cooking chamber between the rear portion and the front portion.

In some embodiments, the first air guide member that extends adjacent to the first lateral portion may comprise a first upper air guide member and a first lower air guide member.

Alternatively or additionally, the second air guide member that extends adjacent to the second lateral portion may comprise a second upper air guide member and a second lower air guide member.

In a particularly preferred embodiment, the at least one air guide member comprises the first upper air guide member, the first lower air guide member, the second upper air guide member, and the second lower air guide member.

Such an arrangement may make for a particularly effective and uniform penetration of the heated air into the food received in the cooking chamber.

In some embodiments, the at least one air guide member is configurable to enable switching between a first air guiding configuration and a second air guiding configuration that is different from the first air guiding configuration, with one of the first and second air guiding configurations enabling the above-described guiding of the heated air from the sidewall vent position(s) downwardly towards the base of the cooking chamber.

The capability to switch between the first and second air guiding configurations may enable the cooking apparatus to be used in different ways, and in particular ways that do not involve enhanced penetration of the heated air into the food received in the cooking chamber as a consequence of the guiding of the heated air from the sidewall vent position(s) downwardly towards the base of the cooking chamber.

Such configurability may be implemented in any suitable manner, for example by the air guide member(s) being collapsible, for example foldable against the sidewall of the cooking chamber.

In some embodiments, the at least one air guide member is removably receivable in the cooking chamber.

For example, when the air guide member(s) is or are received in the cooking chamber, the air guide member(s) may be in a first air guiding configuration that enables guiding of the heated air from the sidewall vent position(s) downwardly towards the base of the cooking chamber. When the air guide member(s) is or are removed from the cooking chamber, the air guide member(s) may be in a second air guiding configuration that provides different heated air circulation in the cooking chamber compared to that provided when the air guide member(s) is or are in the first air guiding configuration.

In some embodiments, the cooking apparatus comprises a food support having a bottom on which food is supportable when received in the cooking chamber.

The food support may support the food above the base of the cooking chamber.

In some embodiments, one or more apertures is or are defined in the bottom of the food support.

Alternatively or additionally, the food support may comprise, e.g. be in the form of, a basket and/or a grille.

The above-mentioned aperture(s) may have any suitable shape. When the food support comprises, e.g. is defined by, a grille, the aperture(s) may include elongate openings between bars or wires that constitute the grille. When the food support comprises, e.g. is defined by, a basket, the aperture(s) may include interstices between solid portions of the basket.

In some embodiments, the food support is arranged or arrangeable in the cooking chamber such that a gap is provided between the bottom of the food support and the base of the cooking chamber.

In such embodiments, the at least one air guide member may be arranged to guide the heated air delivered into the cooking chamber from said sidewall vent position(s) into the gap. The heated air may thus penetrate the food supported on the food support from underneath the food support via the gap.

This may assist to provide an air fryer-like cooking effect.

In some embodiments, the at least one air guide member is configured to cooperate with the food support, with the cooperation between the at least one air guide member and the food support enabling arrangement of the at least one air guide member in the cooking chamber.

This cooperation between the air guide member(s) and the food support may assist positioning of the air guide member(s) in the cooking chamber.

In some embodiments, the food support and the at least one air guide member are attached or attachable to each other to define a cooking assembly that is removably receivable in the cooking chamber.

Such a cooking assembly may facilitate the user in configuring the cooking apparatus according to the desired cooking result. For example, when enhanced penetration of the heated air into the food, e.g. an air fryer-like cooking effect, is desired, the cooking assembly may be received in the cooking chamber. When a different type of cooking effect is desired, only the food support, without the air guide member(s), may be received in the cooking chamber, or a different type of food support may be received in the cooking chamber without the air guide member(s).

In at least some embodiments, an extraction vent is provided in the sidewall, with the air circulation system being arranged to extract air from the cooking chamber via the extraction vent and expel air towards the air delivery vent.

In some embodiments, the bottom of the food support is arranged or arrangeable beneath the extraction vent such that a path of the heated air between the bottom of the food support and the extraction vent comprises an upward component.

Such an upward component of the path of the heated air between the bottom of the food support and the extraction vent may assist passage of the heated air through food supported on the food support.

Thus, the arrangement of the extraction vent can assist to enhance penetration of the heated air into the food, e.g. so as to provide an air fryer-like cooking effect.

In some embodiments, the cooking apparatus comprises a table-top cooking appliance, e.g. a top-loaded table-top cooking appliance.

Such a table-top cooking appliance is positionable by the consumer on a table-top or kitchen work-top.

The table-top cooking appliance may be, for example, a so-called air cooker.

When the table-top cooking appliance is an air cooker, the air circulation system and the air delivery vent may be arranged to deliver heated air from sidewall vent position(s) laterally into the cooking chamber.

The air guide member(s) may nonetheless direct the heated air from the sidewall vent position(s) downwardly towards the base, as previously described.

In embodiments in which the cooking apparatus includes a top-loaded cooking appliance, e.g. a top-loaded table-top cooking appliance, the cooking chamber may be accessible in a way that enables food to be received in the cooking chamber from above.

In such embodiments, the cooking chamber may be accessible by moving a lid arranged above the base of the cooking chamber.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 shows part of a cooking apparatus according to an example;
FIG. 2 schematically depicts heated air delivery in an existing cooking appliance;
FIG. 3 schematically depicts heated air delivery that is different to the heated air delivery shown in FIG. 2;
FIG. 4 shows an interior view of a cooking apparatus according to an example;
FIG. 5 provides another interior view of a cooking apparatus according to an example;
FIG. 6 shows air guide members according to an example;
FIGs. 7A and 7B provide views of a cooking assembly according to an example; and
FIGs. 8A and 8B provide views of a cooking assembly according to another example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention relates to an air guide member arrangeable in a cooking chamber of a cooking appliance to guide heated air delivered into the cooking chamber from one or more sidewall vent positions downwardly towards a base of the cooking chamber. Further provided is a cooking assembly comprising such an air guide member or members, and a food support having a bottom on which food is supportable when received in the cooking chamber.

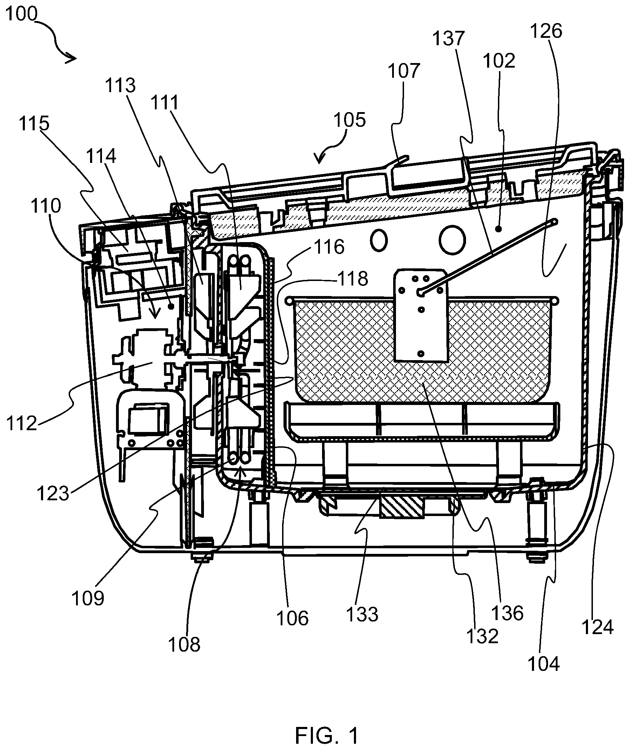

FIG. 1 shows an interior of part of a cooking apparatus 100 according to an example. The cooking apparatus 100 comprises a cooking chamber 102 for receiving food. The cooking chamber 102 is at least partly delimited by a base 104. The base 104 may define a bottom of the cooking chamber 102 when the cooking apparatus 100, e.g. a cooking appliance included in the cooking apparatus 100, is orientated for use.

In some embodiments, such as shown in FIG. 1, the cooking apparatus 100 includes a lid 105 for closing and accessing the cooking chamber 102. The lid 105 may be arranged above the base 104.

As shown in FIG. 1, a sidewall 106 upstands from the base 104. Thus, the cooking chamber 102 is at least partly delimited by the base 104 and the sidewall 106.

When the cooking chamber 102 is closed by the lid 105, the cooking chamber 102 is at least partly, and in some embodiments fully, delimited by the lid 105 together with the base 104 and the sidewall 106.

The lid 105 may be supported above the base 104 by the sidewall 106.

In some embodiments, such as shown in FIG. 1, the lid 105 comprises a lid handle 107 for assisting a user to move the lid 105 in order to close or access the cooking chamber 102.

The lid 105 may be movable to close or access the cooking chamber 102 in any suitable manner, for example by being mounted via a hinge such that pivoting of the lid 105 enables closing and accessing of the cooking chamber 102 and/or by being detachably mounted such that detaching the lid 105 enables accessing of the cooking chamber 102 and replacement of the lid 105 enables closing of the cooking chamber 102.

In some embodiments, such as shown in FIG. 1, the cooking apparatus 100 comprises a top-loaded cooking appliance. In such embodiments, the cooking chamber 102 may be accessible in a way that enables food (not visible in FIG. 1) to be received in the cooking chamber 102 from above.

In such embodiments, the cooking chamber 102 of the top-loaded cooking appliance may be accessible by moving the lid 105 arranged above the base 104 of the cooking chamber 102.

The cooking apparatus 100 comprises a heating system 108. The heating system 108 can be regarded as an air heater for heating air.

The heating system 108 can have any suitable design. In some embodiments, such as depicted in FIG. 1, the heating system 108 comprises a resistive heating element 109.

Such a resistive heating element 109 may, for example, comprise coils spaced apart from each other to enable heating of air passing across and between the coils.

The cooking apparatus 100 comprises an air circulation system 110 for circulating air. In particular, the air circulation system 110 may displace air from the cooking chamber 102 towards the heating system 108, e.g. towards the heating element 109 of the heating system 108, move the thus heated air to the cooking chamber 102, and repeat this process.

In at least some embodiments, the air circulation system 110 comprises a fan 111 and a motor 112, with rotation of the fan 111 by the motor 112 causing the circulating of air.

In some embodiments, the cooking apparatus 100 comprises a cooling fan 113 arranged to displace air in an air cooling channel 114. The air cooling channel 114 may, for example, be arranged to provide cooling to an electronic control unit 115 arranged outside the cooking chamber 102.

Rotation of the cooling fan 113 may be driven in any suitable manner. In some embodiments, such as shown in FIG. 1, the motor 112 that drives rotation of the fan 111 is further arranged to rotate the cooling fan 113. For example, both the fan 111 and the cooling fan 113 may be mounted to a common spindle, in other words shaft, of the motor 112.

More generally, the cooking apparatus 100 comprises an air delivery vent 116 through which the air heated by the heating system 108 is moveable into the cooking chamber 102 by the air circulation system 110.

The air delivery vent 116 is provided at least at one or more sidewall vent positions of the sidewall 106, with each of the one or more sidewall vent positions being elevated relative to the base 104.

The providing of the air delivery vent 116 at least at the sidewall position(s) of the sidewall 106 may mean that the heated air is delivered laterally, e.g. horizontally, into the cooking chamber 102 via the sidewall-positioned air delivery vent 116.

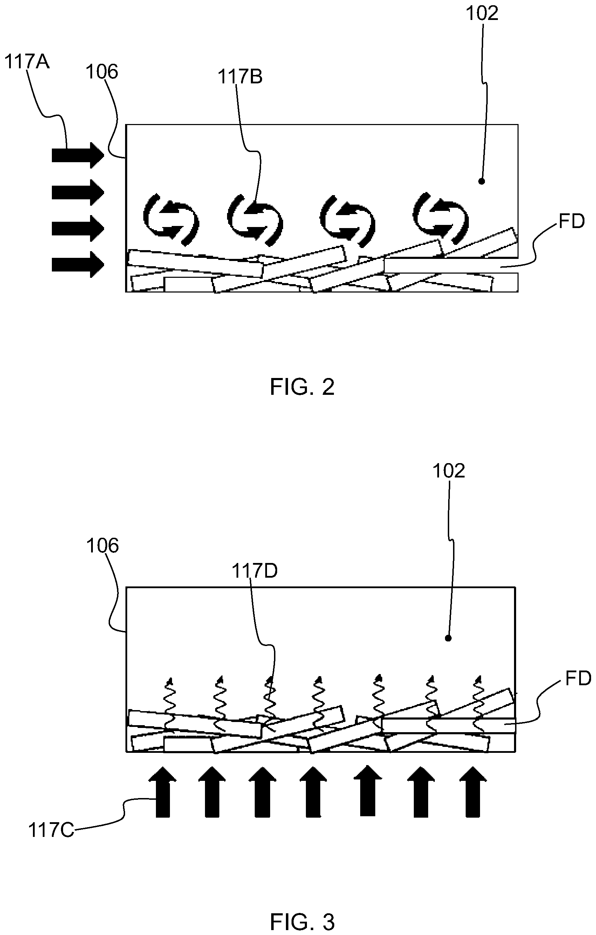

Referring to FIG. 2, this lateral, e.g. horizontal, airflow via the sidewall-positioned air delivery vent 116 is represented by the arrows 117A. Such a lateral airflow, e.g. as provided in conventional air cookers, may not be beneficial for cooking certain types of food FD, such as French fries, because the heated air may not be able to penetrate the food FD sufficiently effectively.

The heated air may stream around the food FD, as represented in FIG. 2 by the arrows 117B, so that outer layers of the food FD absorb significantly more heat energy from the heated air than more central layers. This may lead to relatively poor cooking performance, for example as manifested by a prolonged cooking time and/or an inhomogeneous doneness level of the cooked food FD.

Thus, in conventional air cookers in which there is lateral, e.g. horizontal, airflow via the sidewall-positioned air delivery vent 116, cooking of, for instance, French fries may result in the fries being mostly underdone, in a cooking time which is unacceptably long. The overall performance for cooking foods FD of this type may therefore be unacceptable.

These issues may also be exacerbated by an extraction vent 118, through which air is extracted from the cooking chamber 102 by the air circulation system 110, being provided in the sidewall 106, as shown in FIG. 1. Such a sidewall-positioned extraction vent 118 may mean that air is extracted from the cooking chamber 102 laterally, e.g. horizontally, as well as being delivered laterally into the cooking chamber 102 via the sidewall-positioned air delivery vent 116.

Referring to FIG. 3, such issues may be remedied by changing the direction of the heated airflow so that it is forced to go through the food FD. The heated airflow may be directed into the food FD from a direction normal to a plane of a bottom of a food support, e.g. basket, on which the food FD is supported.

Such a heated airflow directed normal to the plane of the bottom of the food support is represented in FIG. 3 by the arrows 117C. The passage of the heated air through the food FD is represented by the arrows 117D.

Directing airflow normal to the plane of the bottom of the food support may be inherent to, for instance, an air fryer architecture, in which air delivery and extraction vents are arranged so that heated air traverses a height of the cooking chamber 102, and in this way passes upwardly (and/or downwardly) through the food FD received in the cooking chamber 102.

The present disclosure is concerned, at least in part, with providing heated air penetration into food FD, that is to some extent analogous to that of an air fryer, in a cooking apparatus 100 whose air delivery vent 116 is arranged to deliver heated air from sidewall vent position(s) laterally into the cooking chamber 102.

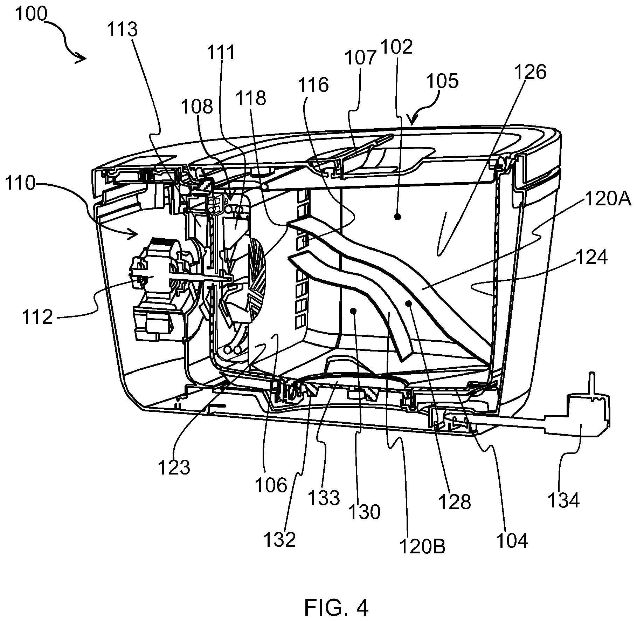

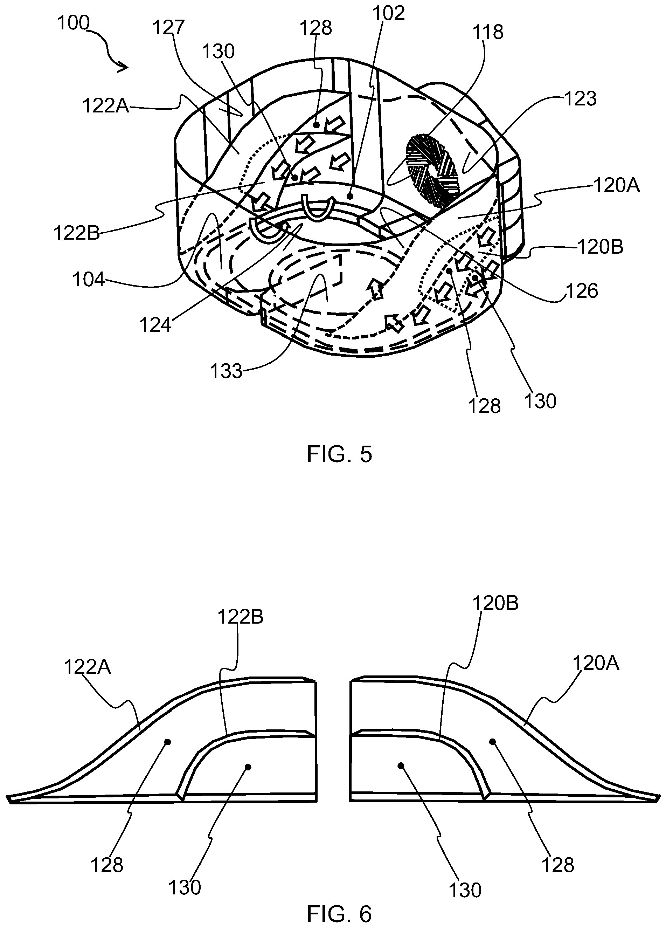

To this end, and referring to FIGs. 4 and 5, the cooking apparatus 100 includes at least one air guide member 120A, 120B; 122A, 122B that directs the heated air from the sidewall vent position(s) downwardly towards the base 104.

By directing the heated airflow downwardly in this manner, the heated air may be guided directly into the food FD and/or the downwardly directed heated air may revert towards the extraction vent 118 with an upward component though the food FD.

Penetration of the heated air into the food FD received in the cooking chamber 102 may thus be enhanced, in spite of the heated air being delivered into the cooking chamber 102 via the sidewall-positioned air delivery vent 116.

The guiding of the heated airflow by the air guide member(s) 120A, 120B; 122A, 122B and the path of the heated air back towards the extraction vent 118 is denoted by the arrows in FIG. 5.

The air guide member(s) 120A, 120B; 122A, 122B may be formed from any suitable material. In some embodiments, the air guide member(s) 120A, 120B; 122A, 122B is or are formed from at least one selected from a metal, e.g. aluminum, a metal alloy, e.g. steel, and a polymer.

In embodiments in which the air guide member(s) 120A, 120B; 122A, 122B is or are, at least partly, formed from a polymer, the polymer may be, for instance, a heat resistant polymer, such as silicone, polyetherimide, polyphthalamide, and/or polyphenylene sulfide.

In some embodiments, such as shown in FIGs. 4 and 5, the sidewall 106 comprises a rear portion 123 and a front portion 124 facing the rear portion 123, with the air delivery vent 116 being provided at least at the rear portion 123, and the at least one air guide member 120A, 120B; 122A, 122B extending between the rear portion 123 and the front portion 124.

By the air guide member(s) 120A, 120B; 122A, 122B, e.g. each of the air guide member(s) 120A, 120B; 122A, 122B, extending between the rear portion 123 and the front portion 124, the heated air may be guided from the rear portion 123 towards the front portion 124, as well as downwardly towards the base 104.

This may assist penetration of the heated air into the food FD received in the cooking chamber 102, for example because the heated airflow may be directed through the food FD in both upwards and rearwards directions through the food FD towards the extraction vent 118.

More generally, the extraction vent 118 is preferably provided, together with the air delivery vent 116, in the rear portion 123 of the sidewall 106.

In some embodiments, such as shown in FIGs. 1, 4 and 5, the sidewall 106 comprises a first lateral portion 126 and a second lateral portion 127 that faces the first lateral portion 126, with each of the first and second lateral portions 126, 127 extending between the rear portion 123 and the front portion 124 of the sidewall 106.

In such embodiments, the at least one air guide member 120A, 120B; 122A, 122B may comprise at least one first air guide member 120A, 120B extending adjacent to the first lateral portion 126.

Alternatively or additionally, at least one second air guide member 122A, 122B may extend adjacent to the second lateral portion 127.

The first air guide member(s) 120A, 120B and/or the second air guide member(s) 122A, 122B being respectively adjacent to the first lateral portion 126 and the second lateral portion 127 may mean that the heated air initially guided by the first and/or second air guide member(s) 120A, 120B; 122A, 122B along side(s) of the cooking chamber 102 can subsequently be introduced into the food FD received more centrally in the cooking chamber 102, e.g. during passage of the heated air back towards the air extraction vent 118 provided at the rear portion 123 of the sidewall 106. This can assist penetration of the heated air into the food FD received in the cooking chamber 102.

In embodiments in which both the first air guide member(s) 120A, 120B and the second air guide member(s) 122A, 122B are included, a relatively uniform penetration of heated air into the food FD from both sides, and thus a more even cooking result, may be achievable.

At least one of the air guide member(s) 120A, 122A may extend to reach a position at or proximal to the front portion 124. This extension of the air guide member(s) 120A, 122A can be regarded as meaning that the air guide member(s) 120A, 122A extend(s) over a majority of the cooking chamber's 102 lateral extent between the rear portion 123 and the front portion 124.

In some embodiments, at least one of the first air guide member(s) 120A extends along the first lateral portion 126 to reach a position at or proximal to the front portion 124. Alternatively or additionally, at least one of the second air guide member(s) 122A may extend along the second lateral portion 127 to reach a position at or proximal to the front portion 124.

In some embodiments, and as best shown in FIG. 4, the at least one air guide member 120A, 120B; 122A, 122B, e.g. each of the at least one air guide member 120A, 120B; 122A, 122B, comprises one or more gradient surfaces that decline(s) from at or proximal to the sidewall vent position(s) towards the base 104 of the cooking chamber 102.

Such gradient surface(s), in other words sloping surface(s), may, for example, comprise curves and/or undulations to control guiding of the heated air by the air guide member(s) 120A, 120B; 122A, 122B towards the base 104 of the cooking chamber 102.

For example, and with reference to FIGs. 4 and 6, the gradient surface(s) include a first surface that declines relatively shallowly away from the sidewall 106, a second surface that extends from an end of the first surface and declines more steeply than the first surface.

In some embodiments, such as shown in FIGs. 4 to 6, the at least one air guide member 120A, 120B; 122A, 122B comprises an upper air guide member 120A; 122A and a lower air guide member 120B; 122B, with the upper air guide member 120A; 122A and the lower air guide member 120B; 122B being spaced apart from each other to define a flow path 128 for the heated air between the upper air guide member 120A; 122A and the lower air guide member 120B; 122B. In other words, a channel for the heated air may be provided between the upper air guide member 120A; 122A and the lower air guide member 120B; 122B.

In such embodiments, the flow path 128 may extend from an upper sidewall vent position downwardly towards the base 104 of the cooking chamber 102.

The flow path/channel 128 may, for example, have a lateral side that is open to the cooking chamber 102, e.g. open to the cooking chamber 102 between the rear portion 123 and the front portion 124. Examples of this are illustrated in FIGs. 4 and 5.

In some embodiments, such as shown in FIGs. 4 to 6, the lower air guide member 120B; 122B is arranged to define a further flow path 130, underneath the lower air guide member 120B; 122B, that extends from a lower sidewall vent position downwardly towards the base 104 of the cooking chamber 102. In other words, a further channel for the heated air may be provided beneath the lower air guide member 120B; 122B, for example between an underside of the lower air guide member 120B; 122B and the base 104 of the cooking chamber 102.

Providing the flow path 128 and the further flow path 130 may assist to allocate the heated air as homogeneously as possible.

The further flow path/channel 130 may, for example, have a lateral side that is open to the cooking chamber 102, e.g. open to the cooking chamber 102 between the rear portion 123 and the front portion 124. Examples of this are illustrated in FIGs. 4 and 5.

Whilst two flow paths 128, 130 are shown in FIGs. 4 to 6, this should not be regarded as being limiting. In other embodiments, further air guide members can be included, in addition to the upper and lower air guide members 120A; 122A, 120B; 122B so as to provide more than two flow paths, e.g. at a given side of the cooking chamber 102, that extend downwardly towards the base 104 of the cooking chamber 102.

In some embodiments, such as shown in FIGs. 4 to 6, the first air guide member 120A, 120B that extends adjacent to the first lateral portion 126 may comprise a first upper air guide member 120A and a first lower air guide member 120B.

Alternatively or additionally, the second air guide member 122A, 122B that extends adjacent to the second lateral portion 127 may comprise a second upper air guide member 122A and a second lower air guide member 122B.

In a particularly preferred embodiment, the at least one air guide member 120A, 120B; 122A, 122B comprises the first upper air guide member 120A, the first lower air guide member 120B, the second upper air guide member 122A, and the second lower air guide member 122B.

Such an arrangement may make for a particularly effective and uniform penetration of the heated air into the food FD received in the cooking chamber 102.

In some embodiments, the at least one air guide member 120A, 120B; 122A, 122B is configurable to enable switching between a first air guiding configuration and a second air guiding configuration that is different from the first air guiding configuration, with one of the first and second air guiding configurations enabling the guiding of the heated air from the sidewall vent position(s) downwardly towards the base 104 of the cooking chamber 102.

The capability to switch between the first and second air guiding configurations may enable the cooking apparatus 100 to be used in different ways, and in particular ways that do not involve enhanced penetration of the heated air into the food FD received in the cooking chamber 102 as a consequence of the guiding of the heated air from the sidewall vent position(s) downwardly towards the base 104 of the cooking chamber 102.

Such configurability may be implemented in any suitable manner, for example by the air guide member(s) 120A, 120B; 122A, 122B being collapsible, for example foldable against the sidewall 106 of the cooking chamber 102.

Alternatively or additionally, the at least one air guide member 120A, 120B; 122A, 122B may be removably receivable in the cooking chamber 102. FIG. 6 shows the at least one air guide member 120A, 120B; 122A, 122B by itself when removed from the cooking chamber 102.

Removing the air guide member(s) 120A, 120B; 122A, 122B may enable the cooking chamber 102 to be used to implement a different cooking function, for example a different cooking function that uses a different food support and/or cooking accessory that may not fit in the cooking chamber 102 while the air guide member(s) 120A, 120B; 122A, 122B is or are received in the cooking chamber 102.

In some embodiments, when the air guide member(s) 120A, 120B; 122A, 122B is or are received in the cooking chamber 102, the air guide member(s) 120A, 120B; 122A, 122B is or are in a first air guiding configuration that enables guiding of the heated air from the sidewall vent position(s) downwardly towards the base 104 of the cooking chamber 102. When the air guide member(s) 120A, 120B; 122A, 122B is or are removed from the cooking chamber 102, the air guide member(s) 120A, 120B; 122A, 122B may be in a second air guiding configuration that provides different heated air circulation in the cooking chamber 102 compared to that provided when the air guide member(s) 120A, 120B; 122A, 122B is or are in the first air guiding configuration.

In some embodiments, such as shown in FIGs. 1, 4 and 5, the cooking apparatus 100 comprises, e.g. is in the form of, a table-top cooking appliance, such as a top-loaded table-top cooking appliance. Such a table-top cooking appliance is positionable by the consumer on a table-top or kitchen work-top.

The table-top cooking appliance may be, for example, a so-called air cooker. When the table-top cooking appliance is an air cooker, the air circulation system 110 and the air delivery vent 116 may be arranged to deliver heated air from sidewall vent position(s) laterally into the cooking chamber 102. The air guide member(s) 120A, 120B; 122A, 122B may nonetheless direct the heated air from the sidewall vent position(s) downwardly towards the base 104 to enhance penetration of the heated air into the food FD, as previously described.

The cooking apparatus 100, e.g. air cooker, may include food steaming functionality. In some embodiments, such as shown in FIGs. 1, 4 and 5, the cooking apparatus 100 comprises a further heating system 132, e.g. comprising a flat heater, arranged to heat a water evaporation portion 133 provided at the base 104 of the cooking chamber 102, so as to promote vaporization of water received in the water evaporation portion 133.

The water evaporation portion 133 may have any suitable shape. In some embodiments, the water evaporation portion 133 comprises a circular recess when viewed in plan from above the base 104 of the cooking chamber 102.

To operate the cooking apparatus 100 for steam cooking, the user may fill the water evaporation portion 133 by supplying water into the base 104 of the cooking chamber 102. The heating system 108 and/or the further heating system 132 may evaporate the water to generate steam.

It is noted that when the cooking apparatus 100 is intended to be used for steam cooking, the air guide member(s) 120A, 120B; 122A, 122B may be in the second air guiding configuration that provides different heated air/steam circulation in the cooking chamber 102 compared to that provided when the air guide member(s) 120A, 120B; 122A, 122B is or are in the first air guiding configuration. This second air guiding configuration may, for instance, be achieved by simply removing the air guide member(s) 120A, 120B; 122A, 122B from the cooking chamber 102, as previously described.

The cooking apparatus 100, e.g. table-top cooking appliance, can be powered in any suitable manner, such as by one or more batteries and/or via a mains source of power. In embodiments, such as that shown in FIG. 4, in which the cooking apparatus 100 is powerable by a mains source of power, the cooking apparatus 100 can include a plug 134 for connecting to a mains power socket (not visible).

In some embodiments, and referring to FIGs. 1, 7A, 7B, 8A and 8B, a food support 136 has a bottom on which food FD is supportable at least when the food support 136 is received in the cooking chamber 102.

In such embodiments, the food support 136 may support the food FD above the base 104 of the cooking chamber 102.

One or more apertures may be defined in the bottom of the food support 136. The aperture(s) may permit the heated air to reach the food FD supported on the food support 136 from underneath the food FD.

Accordingly, such aperture(s) in the bottom of the food support 136 may assist the heated air to penetrate the food FD.

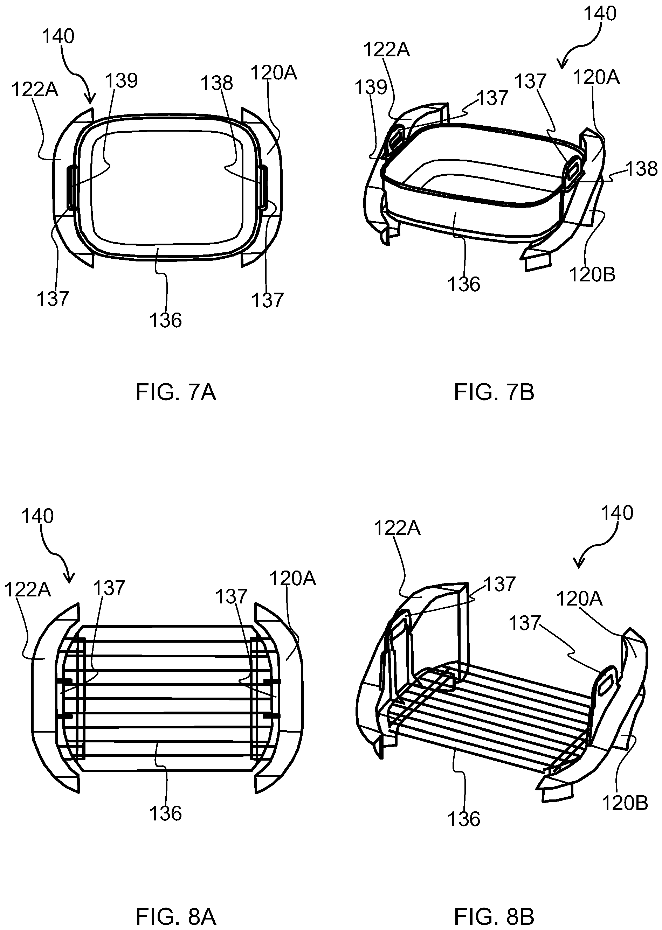

In some embodiments, such as shown in FIGs. 1, 7A and 7B, the food support 136 comprises, e.g. is in the form of, a basket. Alternatively, and as shown in FIGs. 8A and 8B, the food support 136 comprises, e.g. is in the form of, a grille.

The above-mentioned aperture(s) may have any suitable shape. When the food support 136 comprises, e.g. is defined by, a grille, the aperture(s) may include elongate openings between bars or wires that constitute the grille. When the food support 136 comprises, e.g. is defined by, a basket, the aperture(s) may include interstices between solid portions of the basket.

The food support 136 is preferably removable from the cooking chamber 102.

Removing the food support 136 from the cooking chamber 102 may assist with loading and unloading of food FD onto and off the food support 136 and/or with cleaning of the cooking chamber 102 and the food support 136 after use.

In some embodiments, such as shown in FIGs. 1, 7A, 7B, 8A and 8B, the food support member 136 comprises one or more handles 137 for assisting the user to manipulate the food support 136, for example for assisting the user to lift the food support 136 into and out of the cooking chamber 102.

In some embodiments, the food support 136 is arranged or arrangeable in the cooking chamber 102 such that a gap is provided between the bottom of the food support 136 and the base 104 of the cooking chamber 102.

In such embodiments, the at least one air guide member 120A, 120B; 122A, 122B may be arranged to guide the heated air delivered into the cooking chamber 102 from the sidewall vent position(s) into the gap.

The heated air may thus penetrate the food FD supported on the food support 136 from underneath the food support 136 via the gap. This may assist to provide an air fryer-like cooking effect.

It is noted, more generally, that the air guide member(s) 120A, 120B; 122A, 122B may be kept in position in the cooking chamber 102 in any suitable manner. In some embodiments, the air guide member(s) 120A, 120B; 122A, 122B include(s) one or more attachment members configured to engage with a portion of the sidewall 106 that delimits the air delivery vent 116.

For example, the one or more attachment members are arranged to hook the air guide member(s) 120A, 120B; 122A, 122B to the portion of the sidewall 106 that delimits the air delivery vent 116.

As an alternative or in addition to the attachment member(s), the at least one air guide member 120A, 120B; 122A, 122B may be configured to cooperate with the food support 136, with the cooperation between the at least one air guide member 120A, 120B; 122A, 122B and the food support 136 enabling arrangement of the at least one air guide member 120A, 120B; 122A, 122B in the cooking chamber 102.

This cooperation between the air guide member(s) 120A, 120B; 122A, 122B and the food support 136 may assist positioning of the air guide member(s) 120A, 120B; 122A, 122B in the cooking chamber 102.

In other words, the food support 136, e.g. basket or grille, may retain the air guide member(s) 120A, 120B; 122A, 122B in position, e.g. by form closure.

Such retention of the air guide member(s) 120A, 120B; 122A, 122B in position via cooperation with the food support 136 may render the air guide member(s) 120A, 120B; 122A, 122B immovable while the food support 136 and the air guide member(s) 120A, 120B; 122A, 122B are cooperating with each other within the cooking chamber 102.

The cooperation between the air guide member(s) 120A, 120B; 122A, 122B and the food support 136 can be implemented in any suitable manner. In some embodiments, such as shown in FIGs. 7A and 7B, the air guide member(s) 120A, 120B; 122A, 122B include an engagement member 138, 139 configured to engage the handle(s) 137 of the food support 136.

For example, the engagement member 138, 139 comprises, e.g. is in the form of, an opening through which the, e.g. each, handle 137 is passable in order for the air guide member(s) 120A, 120B; 122A, 122B to cooperate with the food support 136.

In some embodiments, and with continued reference to FIGs. 7A, 7B, 8A and 8B, the food support 136 and the at least one air guide member 120A, 120B; 122A, 122B are attached or attachable to each other to define a cooking assembly 140 that is removably receivable in the cooking chamber 102.

Such a cooking assembly 140 may facilitate the user in configuring the cooking apparatus 100 according to the desired cooking result. For example, when enhanced penetration of the heated air into the food FD, e.g. an air fryer-like cooking effect, is desired, the cooking assembly 140 may be received in the cooking chamber 102.

When a different type of cooking effect is desired, only the food support 136, without the air guide member(s) 120A, 120B; 122A, 122B, may be received in the cooking chamber 102, or a different type of food support 136 may be received in the cooking chamber 102 without the air guide member(s) 120A, 120B; 122A, 122B.

In summary, the present disclosure concerns redirecting airflow from a lateral, e.g. horizontal, direction to a vertical direction relative to a plane on which food FD is supported in a cooking chamber 102. This is with the aim of forcing heated air through the food FD, e.g. staple food FD, to increase heat transfer to the food FD and hence enhance cooking performance. Such airflow redirection is via air guide member(s) 120A, 120B; 122A, 122B, which guide the heated air from a sidewall-positioned air delivery vent 116 towards a base 104 of the cooking chamber 102.

Once the heated air is at or proximal to the base 104 of the cooking chamber 102, it may be forced to go through the food FD to reach, for example, a sidewall-positioned extraction vent 118. This may enable an air fryer-type cooking effect to be achieved in, for instance, an air cooker.

When cooking French fries, the cooking time may be decreased by approximately 40% relative to the scenario in which no such air guide member 120A, 120B; 122A, 122B is used.

Alternatively or additionally, grilling performance may be enhanced when using the air guide member(s) 120A, 120B; 122A, 122B. Due to the relatively high temperature and flow velocity, heat transfer to the food FD being grilled is effective, with concomitant desirable browning, including grille stripes, of the food FD being achievable.

Thus, the air guide member(s) 120A, 120B; 122A, 122B may lead to enhanced cooking functions, and in particular air fryer-like, grilling and/or roasting functions.

The air guide member(s) 120A, 120B; 122A, 122B may also improve other existing cooking methods, such as steaming, air steaming, sous vide, etc.

Whilst the air guide member(s) 120A, 120B; 122A, 122B is/are primarily envisaged for cooking with heated air, it may also be contemplated that the air guide member(s) 120A, 120B; 122A, 122B is/are used in steam cooking, for example via use of the water evaporation portion 133 for generating steam.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A cooking apparatus (100) comprising:
a cooking chamber (102) for receiving food, the cooking chamber being at least partly delimited by a base (104) and a sidewall (106) upstanding from the base;
a heating system (108);
an air circulation system (110);
an air delivery vent (116) through which air heated by the heating system is moveable into the cooking chamber by the air circulation system, the air delivery vent being provided at least at one or more sidewall vent positions of the sidewall, each of the one or more sidewall vent positions being elevated relative to the base; and
at least one air guide member (120A, 120B; 122A, 122B) arranged or arrangeable in the cooking chamber to guide the heated air delivered into the cooking chamber from said one or more sidewall vent positions downwardly towards the base,
**characterised in that** the sidewall comprises a rear portion (123) and a front portion (124) facing the rear portion, the air delivery vent being provided at least at the rear portion, and the at least one air guide member extending between the rear portion and the front portion.

2. The cooking apparatus (100) according to claim 1, wherein the sidewall (106) comprises a first lateral portion (126) and a second lateral portion (127) that faces the first lateral portion, each of the first and second lateral portions extending between the rear portion (123) and the front portion (124) of the sidewall, the at least one air guide member (120A, 120B; 122A, 122B) comprising at least one first air guide member (120A, 120B) extending adjacent to the first lateral portion and/or at least one second air guide member (122A, 122B) extending adjacent to the second lateral portion.

3. The cooking apparatus (100) according to claim 1 or claim 2, wherein the at least one air guide member (120A, 120B; 122A, 122B) comprises one or more gradient surfaces that decline(s) from at or proximal to the sidewall vent position(s) towards the base (104) of the cooking chamber (102).

4. The cooking apparatus (100) according to any one of claims 1 to 3, wherein the at least one air guide member (120A, 120B; 122A, 122B) comprises an upper air guide member (120A; 122A) and a lower air guide member (120B; 122B), the upper and lower air guide members being spaced apart from each other to define a flow path (128) for the heated air between the upper and lower air guide members, the flow path extending from an upper sidewall vent position downwardly towards the base (104) of the cooking chamber (102).

5. The cooking apparatus (100) according to claim 4, wherein the lower air guide member (120B; 122B) is arranged to define a further flow path (130), underneath the lower air guide member, that extends from a lower sidewall vent position downwardly towards the base (104) of the cooking chamber (102).

6. The cooking apparatus (100) according to any one of claims 1 to 5, wherein the at least one air guide member (120A, 120B; 122A, 122B) is configurable to enable switching between a first air guiding configuration and a second air guiding configuration that is different from the first air guiding configuration, one of said first and second air guiding configurations enabling said guiding of the heated air from the sidewall vent position(s) downwardly towards the base (104) of the cooking chamber (102).

7. The cooking apparatus (100) according to any one of claims 1 to 6, wherein the at least one air guide member (120A, 120B; 122A, 122B) is removably receivable in the cooking chamber (102).

8. The cooking apparatus (100) according to any one of claims 1 to 7, comprising a food support (136) having a bottom on which food is supportable when received in the cooking chamber (102).

9. The cooking apparatus (100) according to claim 8, wherein one or more apertures is or are defined in the bottom of the food support (136).

10. The cooking apparatus (100) according to claim 8 or claim 9, wherein the food support (136) comprises a basket and/or a grille.

11. The cooking apparatus (100) according to any one of claims 8 to 10, wherein the food support (136) is arranged or arrangeable in the cooking chamber (102) such that a gap is provided between the bottom of the food support and the base (104) of the cooking chamber, the at least one air guide member (120A, 120B; 122A, 122B) being arranged to guide the heated air delivered into the cooking chamber from said sidewall vent position(s) into the gap.

12. The cooking apparatus (100) according to any one of claims 8 to 11, wherein the at least one air guide member (120A, 120B; 122A, 122B) is configured to cooperate with the food support (136), the cooperation between the at least one air guide member and the food support enabling arrangement of the at least one air guide member in the cooking chamber (102).

13. The cooking apparatus (100) according to any one of claims 8 to 12, wherein the food support (136) and the at least one air guide member (120A, 120B; 122A, 122B) are attached or attachable to each other to define a cooking assembly (140) that is removably receivable in the cooking chamber (102).

14. The cooking apparatus (100) according to any one of claims 1 to 13, wherein an extraction vent (118) is provided in the sidewall (106), the air circulation system (110) being arranged to extract air from the cooking chamber (102) via the extraction vent and expel air towards the air delivery vent (116).

15. The cooking apparatus (100) according to any one of claims 1 to 14, comprising a table-top cooking appliance; optionally wherein the table-top cooking appliance is in the form of an air cooker.

## Patentansprüche

1. Kocheinrichtung (100), umfassend:
eine Garkammer (102) zum Aufnehmen von Nahrungsmitteln, wobei die Garkammer zumindest teilweise durch eine Basis (104) und eine von der Basis aufragende Seitenwand (106) begrenzt ist;
ein Heizsystem (108);
ein Luftzirkulationssystem (110);
eine Luftzufuhröffnung (116), durch welche von dem Heizsystem erhitzte Luft durch das Luftzirkulationssystem in die Garkammer bewegbar ist, wobei die Luftzufuhröffnung zumindest an einer oder mehreren Seitenwandöffnungspositionen der Seitenwand bereitgestellt ist, wobei jede der einen oder mehreren Seitenwandöffnungspositionen relativ zu der Basis erhöht ist; und
zumindest ein Luftführungselement (120A, 120B; 122A, 122B), welches in der Garkammer angeordnet oder anordenbar ist, um die von einer oder mehreren Seitenwandöffnungsposition in die Garkammer abgegebene erhitzte Luft nach unten in Richtung der Basis zu leiten, **dadurch gekennzeichnet, dass** die Seitenwand einen hinteren Abschnitt (123) und einen dem hinteren Abschnitt zugewandten vorderen Abschnitt (124) umfasst, wobei die Luftzufuhröffnung zumindest an dem hinteren Abschnitt bereitgestellt ist und sich das zumindest eine Luftführungselement zwischen dem hinteren Abschnitt und dem vorderen Abschnitt erstreckt.

2. Kocheinrichtung (100) nach Anspruch 1, wobei die Seitenwand (106) einen ersten seitlichen Abschnitt (126) und einen zweiten seitlichen Abschnitt (127) umfasst, welcher dem ersten seitlichen Abschnitt zugewandt ist, wobei sich der erste und zweite seitliche Abschnitt jeweils zwischen dem hinteren Abschnitt (123) und dem vorderen Abschnitt (124) der Seitenwand erstreckt, wobei das zumindest eine Luftführungselement (120A, 120B; 122A, 122B) zumindest ein erstes Luftführungselement (120A, 120B), welches sich neben dem ersten seitlichen Abschnitt erstreckt, und/oder zumindest ein zweites Luftführungselement (122A, 122B) umfasst, welches sich neben dem zweiten seitlichen Abschnitt erstreckt.

3. Kocheinrichtung (100) nach Anspruch 1 oder Anspruch 2, wobei das zumindest eine Luftführungselement (120A, 120B; 122A, 122B) eine oder mehrere Gradientenflächen umfasst, welche von der/den Seitenwandöffnungsposition(en) oder in deren Nähe in Richtung der Basis (104) der Garkammer (102) abfällt/abfallen.

4. Kocheinrichtung (100) nach einem der Ansprüche 1 bis 3, wobei das zumindest eine Luftführungselement (120A, 120B; 122A, 122B) ein oberes Luftführungselement (120A; 122A) und ein unteres Luftführungselement (120B; 122B) umfasst, wobei das obere und das untere Luftführungselement voneinander beabstandet sind, um einen Strömungsweg (128) für die erhitzte Luft zwischen dem oberen und dem unteren Luftführungselement zu definieren, wobei sich der Strömungsweg von einer oberen Seitenwandöffnungsposition nach unten in Richtung der Basis (104) der Garkammer (102) erstreckt.

5. Kocheinrichtung (100) nach Anspruch 4, wobei das untere Luftführungselement (120B; 122B) so angeordnet ist, dass es einen weiteren Strömungsweg (130) unterhalb des unteren Luftführungselements definiert, welcher sich von einer unteren Seitenwandöffnungsposition nach unten in Richtung der Basis (104) der Garkammer (102) erstreckt.

6. Kocheinrichtung (100) nach einem der Ansprüche 1 bis 5, wobei das zumindest eine Luftführungselement (120A, 120B; 122A, 122B) konfigurierbar ist, um Umschalten zwischen einer ersten Luftführungskonfiguration und einer zweiten Luftführungskonfiguration, welche sich von der ersten Luftführungskonfiguration unterscheidet, zu ermöglichen, wobei eine der ersten und der zweiten Luftführungskonfiguration Leiten der erhitzten Luft von der/den Seitenwandöffnungsposition(en) nach unten in Richtung der Basis (104) der Garkammer (102) ermöglicht.

7. Kocheinrichtung (100) nach einem der Ansprüche 1 bis 6, wobei das zumindest eine Luftführungselement (120A, 120B; 122A, 122B) entfernbar in der Garkammer (102) aufnehmbar ist.

8. Kocheinrichtung (100) nach einem der Ansprüche 1 bis 7, umfassend einen Nahrungsmittelträger (136), welcher einen Boden aufweist, auf welchem Nahrungsmittel abgelegt werden können, wenn sie in die Garkammer (102) aufgenommen werden.

9. Kocheinrichtung (100) nach Anspruch 8, wobei eine oder mehrere Aussparungen im Boden des Nahrungsmittelträgers (136) definiert ist oder sind.

10. Kocheinrichtung (100) nach Anspruch 8 oder Anspruch 9, wobei der Nahrungsmittelträger (136) einen Korb und/oder ein Gitter umfasst.

11. Kocheinrichtung (100) nach einem der Ansprüche 8 bis 10, wobei der Nahrungsmittelträger (136) so in der Garkammer (102) angeordnet oder anordenbar ist, dass zwischen dem Boden des Nahrungsmittelträgers und der Basis (104) der Garkammer ein Spalt bereitgestellt ist, wobei das zumindest eine Luftführungselement (120A, 120B; 122A, 122B) so angeordnet ist, dass es die von der/den Seitenwandöffnungsposition(en) in die Garkammer geleitete erhitzte Luft in den Spalt leitet.

12. Kocheinrichtung (100) nach einem der Ansprüche 8 bis 11, wobei das zumindest eine Luftführungselement (120A, 120B; 122A, 122B) dazu konfiguriert ist, mit dem Nahrungsmittelträger (136) zusammenzuwirken, wobei das Zusammenwirken zwischen dem zumindest einen Luftführungselement und dem Nahrungsmittelträger die Anordnung des zumindest einen Luftführungselements in der Garkammer (102) ermöglicht.

13. Kocheinrichtung (100) nach einem der Ansprüche 8 bis 12, wobei der Nahrungsmittelträger (136) und das zumindest eine Luftführungselement (120A, 120B; 122A, 122B) aneinander befestigt oder befestigbar sind, um eine Kochanordnung (140) zu definieren, welche entfernbar in der Garkammer (102) aufnehmbar ist.

14. Kocheinrichtung (100) nach einem der Ansprüche 1 bis 13, wobei in der Seitenwand (106) eine Abluftöffnung (118) bereitgestellt ist, wobei das Luftzirkulationssystem (110) so angeordnet ist, dass es Luft über die Abluftöffnung aus der Garkammer (102) absaugt und Luft in Richtung der Luftzufuhröffnung (116) ausstößt.

15. Kocheinrichtung (100) nach einem der Ansprüche 1 bis 14, umfassend ein Tischkochgerät; wobei das Tischkochgerät optional in der Form eines Heißluftkochers ist.

## Revendications

1. Appareil de cuisson (100) comprenant :
une chambre de cuisson (102) pour recevoir des aliments, la chambre de cuisson étant au moins partiellement délimitée par une base (104) et une paroi latérale (106) s'élevant à partir de la base ;
un système de chauffage (108) ;
un système de circulation d'air (110) ;
un évent de distribution d'air (116) par lequel de l'air chauffé par le système de chauffage peut être déplacé dans la chambre de cuisson par le système de circulation d'air, l'évent de distribution d'air étant ménagé au moins à une ou plusieurs positions d'évent de paroi latérale de la paroi latérale, chacune des une ou plusieurs positions d'évent de paroi latérale étant élevée par rapport à la base ; et
au moins un élément de guidage d'air (120A, 120B ; 122A, 122B) agencé, ou pouvant être agencé, dans la chambre de cuisson pour guider l'air chauffé distribué dans la chambre de cuisson à partir desdites une ou plusieurs positions d'évent de paroi latérale vers le bas vers la base, **caractérisé en ce que** la paroi latérale comprend une partie arrière (123) et une partie avant (124) faisant face à la partie arrière, l'évent de distribution d'air étant ménagé au moins au niveau de la partie arrière, et le au moins un élément de guidage d'air s'étendant entre la partie arrière et la partie avant.

2. Appareil de cuisson (100) selon la revendication 1, dans lequel la paroi latérale (106) comprend une première partie latérale (126) et une seconde partie latérale (127) qui fait face à la première partie latérale, chacune des première et seconde parties latérales s'étendant entre la partie arrière (123) et la partie avant (124) de la paroi latérale, le au moins un élément de guidage d'air (120A, 120B ; 122A, 122B) comprenant au moins un premier élément de guidage d'air (120A, 120B) s'étendant adjacent à la première partie latérale et/ou au moins un second élément de guidage d'air (122A, 122B) s'étendant adjacent à la seconde partie latérale.

3. Appareil de cuisson (100) selon la revendication 1 ou la revendication 2, dans lequel le au moins un élément de guidage d'air (120A, 120B ; 122A, 122B) comprend une ou plusieurs surfaces de gradient qui déclinent à partir de, ou à proximité de, la ou des positions d'évent de paroi latérale vers la base (104) de la chambre de cuisson (102).

4. Appareil de cuisson (100) selon l'une quelconque des revendications 1 à 3, dans lequel le au moins un élément de guidage d'air (120A, 120B ; 122A, 122B) comprend un élément de guidage d'air supérieur (120A ; 122A) et un élément de guidage d'air inférieur (120B ; 122B), les éléments de guidage d'air supérieur et inférieur étant espacés l'un de l'autre pour définir un trajet de flux (128) pour l'air chauffé entre les éléments de guidage d'air supérieur et inférieur, le trajet de flux s'étendant d'une position d'évent de paroi latérale supérieure vers le bas vers la base (104) de la chambre de cuisson (102).

5. Appareil de cuisson (100) selon la revendication 4, dans lequel l'élément de guidage d'air inférieur (120B ; 122B) est agencé pour définir un trajet de flux supplémentaire (130), sous l'élément de guidage d'air inférieur, qui s'étend depuis une position d'évent de paroi latérale inférieure vers le bas vers la base (104) de la chambre de cuisson (102).

6. Appareil de cuisson (100) selon l'une quelconque des revendications 1 à 5, dans lequel le au moins un élément de guidage d'air (120A, 120B ; 122A, 122B) peut être configuré pour permettre une commutation entre une première configuration de guidage d'air et une seconde configuration de guidage d'air qui est différente de la première configuration de guidage d'air, l'une desdites première et seconde configurations de guidage d'air permettant ledit guidage de l'air chauffé depuis la ou les positions d'évent de paroi latérale vers le bas vers la base (104) de la chambre de cuisson (102).

7. Appareil de cuisson (100) selon l'une quelconque des revendications 1 à 6, dans lequel le au moins un élément de guidage d'air (120A, 120B ; 122A, 122B) peut être reçu de manière amovible dans la chambre de cuisson (102).

8. Appareil de cuisson (100) selon l'une quelconque des revendications 1 à 7, comprenant un support d'aliments (136) présentant un fond sur lequel des aliments peuvent être supportés lorsqu'ils sont reçus dans la chambre de cuisson (102).

9. Appareil de cuisson (100) selon la revendication 8, dans lequel un ou plusieurs orifices sont définis dans le fond du support d'aliments (136).

10. Appareil de cuisson (100) selon la revendication 8 ou la revendication 9, dans lequel le support d'aliments (136) comprend un panier et/ou une grille.

11. Appareil de cuisson (100) selon l'une quelconque des revendications 8 à 10, dans lequel le support d'aliments (136) est agencé, ou peut être agencé, dans la chambre de cuisson (102) de telle sorte qu'un espace soit ménagé entre le fond du support d'aliments et la base (104) de la chambre de cuisson, le au moins un élément de guidage d'air (120A, 120B ; 122A, 122B) étant agencé pour guider l'air chauffé distribué dans la chambre de cuisson depuis ladite ou lesdites positions d'évent de paroi latérale dans l'espace.

12. Appareil de cuisson (100) selon l'une quelconque des revendications 8 à 11, dans lequel le au moins un élément de guidage d'air (120A, 120B ; 122A, 122B) est configuré pour coopérer avec le support d'aliments (136), la coopération entre le au moins un élément de guidage d'air et le support d'aliments permettant un agencement du au moins un élément de guidage d'air dans la chambre de cuisson (102).

13. Appareil de cuisson (100) selon l'une quelconque des revendications 8 à 12, dans lequel le support d'aliments (136) et le au moins un élément de guidage d'air (120A, 120B ; 122A, 122B) sont fixés, ou peuvent être fixés, les uns aux autres pour définir un ensemble de cuisson (140) qui peut être reçu de manière amovible dans la chambre de cuisson (102).

14. Appareil de cuisson (100) selon l'une quelconque des revendications 1 à 13, dans lequel un évent d'extraction (118) est ménagé dans la paroi latérale (106), le système de circulation d'air (110) étant agencé pour extraire de l'air de la chambre de cuisson (102) par l'évent d'extraction et expulser l'air vers l'évent de distribution d'air (116).

15. Appareil de cuisson (100) selon l'une quelconque des revendications 1 à 14, comprenant un appareil de cuisson de table ; facultativement dans lequel l'appareil de cuisson de table se présente sous la forme d'un cuiseur à air.
